# EUROPEAN PATENT APPLICATION

(11) **EP 4 810 293 A1**
(43) Date of publication of application: **23.09.2026**
(21) Application number: 23958936.9
(22) Date of filing: 13.11.2023
(51) Int. Cl.: B60K 35/00, F16H 19/04, B60R 7/04

(54) **DISPLAY DEVICE**

(71) Applicant: LG Electronics Inc., Yeongdeungpo-gu Seoul 07336 (KR)
(72) Inventor: KIM, Yunjoo, Seoul 06772 (KR); IM, Jaebeom, Seoul 06772 (KR); KIM, Dongeun, Seoul 06772 (KR)
(74) Representative: Vossius & Partner Patentanwälte Rechtsanwälte mbB
(86) International application number: PCT/KR2023/018121
(87) International publication number: WO 2025/105508

(57) **Abstract**

Disclosed is a display device. The display device disclosed herein may include: a curved first display; a second display which is overlapped with the first display in the radial direction of the first display and which is curved along the first display; a first plate to which the first display is coupled so as to be movable in the circumferential direction of the first display; and a second plate to which the second display is coupled so as to be movable in the circumferential direction of the second display, wherein the second plate may be coupled to the first plate so as to be movable in the radial direction of the first display.

## Description

### TECHNICAL FIELD

The present disclosure relates to a display device. More particularly, the display device of the present disclosure can be used for vehicles or other purposes.

### BACKGROUND ART

As the information society develops, the demand for display devices is increasing in various forms. In response to this, recently, various display devices such as Liquid Crystal Display Device (LCD), Plasma Display Panel (PDP), Electro luminescent Display (ELD), Vacuum Fluorescent Display (VFD), and Organic Light Emitting Diode (OLED) have been researched and used. A display device using an organic light emitting diode (OLED) has the advantage of superior brightness and viewing angle compared to a liquid crystal display device, and can be implemented in an ultra-thin shape as it does not require a backlight unit.

A vehicle refers to a means of transport that moves under the control of a driver. A driver needs information related to vehicle's status to operate a vehicle, and the vehicle presents information related to vehicle's status to the driver through analog display devices or digital displays. As vehicle functions and performance improve, more information can be presented to a driver than before, and research has been conducted on displays for providing safe and space-efficient information due to a structure of vehicle which is constrained by passenger safety and space limitations.

Recently, self-driving vehicles capable of driving on their own without driver intervention have been developed. Inside a self-driving vehicle, a driver or passenger can receive information necessary for operating a vehicle, as well as information for work or convenience. In-vehicle infotainment (IVI) refers to a service implemented by devices that are installed inside a vehicle and provide entertainment for users, as well as driving-related information, such as vehicle status and navigation. In-car entertainment (ICE) refers to providing media for users inside the vehicle.

Recently, extensive research has been conducted on such vehicle display devices.

### DETAILED DESCRIPTION OF INVENTION

### TECHNICAL PROBLEMS

An object of the present disclosure is to solve the aforementioned problems and other problems.

Another object may be to provide a structure that allows displays to be stacked or unfolded.

Another object may be to provide various examples of a structure that moves displays to a specific display mode.

Another object may be to provide a structure that prevents displays from interfering with each other during the switching of display modes.

Another object may be to provide a cover that can cover or open displays.

Another object may be to provide a refrigerator or a storage box for storing items in a housing where displays are seated.

Another object may be to provide a display device that provides images to a cabin (i.e., a passenger space) of a vehicle.

### TECHNICAL SOLUTION

According to an aspect of the present disclosure for achieving the above or other objects, a display device may include: a curved first display; a second display which overlaps with the first display in a radial direction of the first display, and which is curved along the first display; a first plate to which the first display is movably coupled in a circumferential direction of the first display; and a second plate to which the second display is movably coupled in a circumferential direction of the second display, wherein the second plate may be movably coupled to the first plate in the radial direction of the first display.

A vehicle may include the display device facing a cabin of the vehicle.

### EFFECT OF INVENTION

The effects of the display device according to the present disclosure are described as follows.

According to at least one of the embodiments of the present disclosure, there may be provided a structure that allows displays to be stacked or unfolded.

According to at least one of the embodiments of the present disclosure, there may be provided various examples of a structure that moves displays to a specific display mode.

According to at least one of the embodiments of the present disclosure, there may be provided a structure that prevents displays from interfering with each other during the switching of display modes.

According to at least one of the embodiments of the present disclosure, there may be provided a cover that can cover or open displays.

According to at least one of the embodiments of the present disclosure, there may be provided a refrigerator or a storage box for storing items in a housing where displays are seated.

According to at least one of the embodiments of the present disclosure, there may be provided a display device that provides images to a cabin (i.e., a passenger space) of a vehicle.

Further scope of the applicability of the present disclosure will become apparent from the following detailed description. However, since various changes and modifications within the spirit and scope of the present disclosure are clearly understood by those skilled in the art, specific embodiments such as the detailed description and preferred embodiments of the present disclosure should be understood as being given merely as examples.

### BRIEF DESCRIPTION OF THE DRAWING

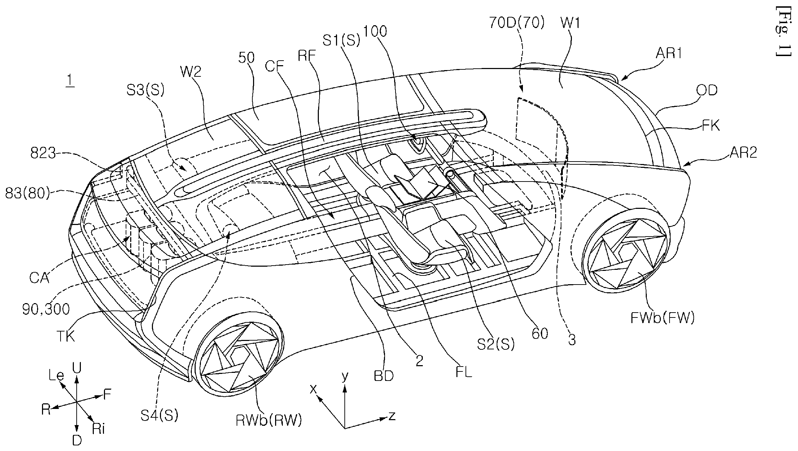

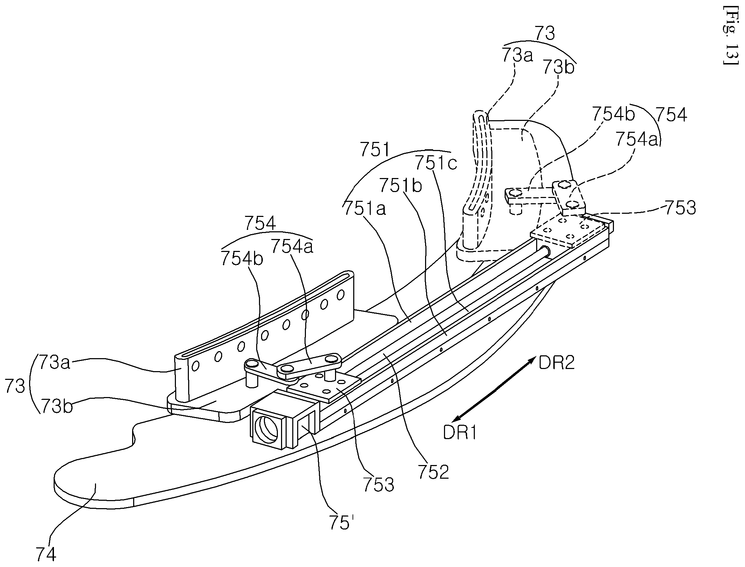

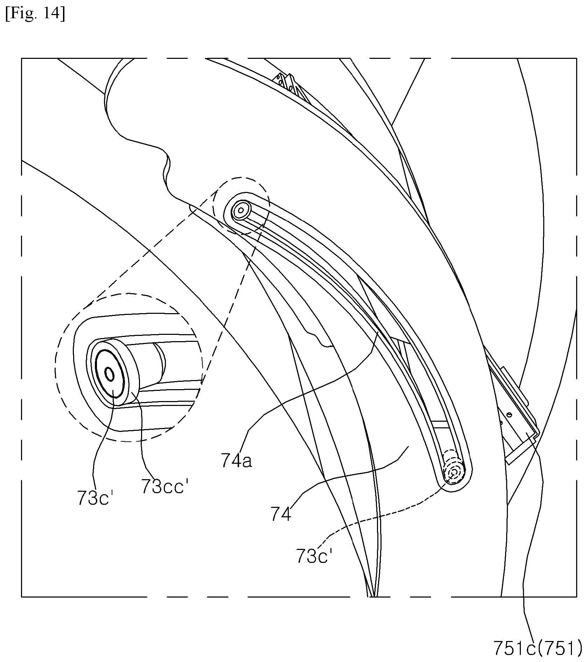

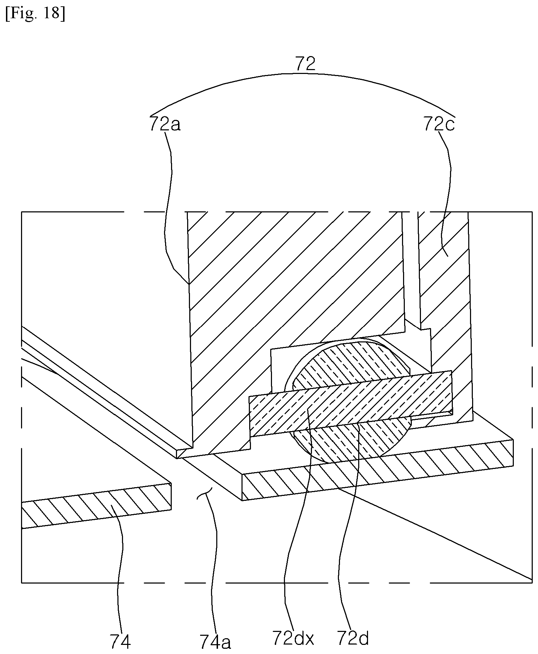

FIGS. 1 to 36 are drawings illustrating examples of a display device according to embodiments of the present disclosure.

### MODE FOR CARRYING OUT THE INVENTION

In the following description, the same or similar components are assigned the same reference numbers, and overlapping descriptions with respect to the same reference numbers may be omitted.

In the following description, suffixes such as "module" and "unit" may be used to refer to elements or components. Use of such suffixes herein is merely intended to facilitate description of the specification, and the suffixes do not have any special meaning or function.

In the following description, when it is determined that a detailed description of a well-known technology may obscure the gist of an embodiment of the present disclosure, a detailed description of the well-known technology may be omitted. In the following description, the accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

Terms such as first and second used in the following description may be used. These terms are only for distinguishing the elements from other elements, and the essence, sequence, or order of the elements are not limited by the terms.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

The direction indications of up (U, y), down D, left (Le, x), right Ri, front (F, z) and rear R shown in the drawings are only for the convenience of explanation, and the technical concepts disclosed in this specification are not limited thereby.

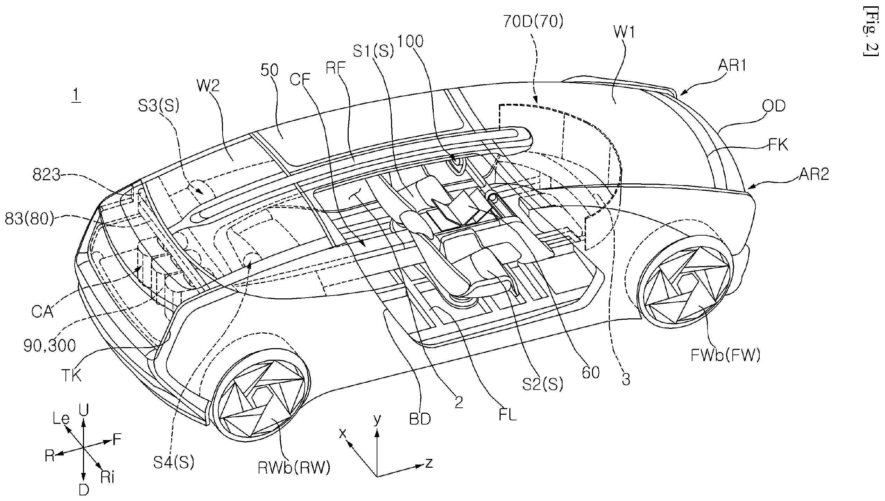

Referring to FIGS. 1 and 2, a vehicle 1 may use gasoline, diesel, gas, electricity, or hydrogen as fuel. The vehicle 1 may be able to perform a self-driving.

A frame FL may form a floor of the vehicle 1. A body BD that constitutes a roof and side panel of the vehicle 1 may be assembled to the frame FL or formed as one body with the frame FL. The frame FL may be referred to as a floor FL.

A chassis may be assembled to the frame FL. The chassis may include a power unit, such as an engine using fossil fuels as an energy source or a motor using electricity as an energy source, a power train system, a suspension system, a steering system such as a steering wheel 100, a brake system, and wheels FW, RW. The wheels FW, RW may include tires.

For example, a pair of front wheels FW may be mounted on the left and right sides of the frame FL while being adjacent to the front end of the frame FL. For example, a pair of rear wheels RW may be mounted on the left and right sides of the frame FL while being adjacent to the rear end of the frame FL.

A seat S may be disposed in a cabin 2 of the vehicle 1 formed by the frame FL and the body BD. The cabin 2 may be a passenger space of the vehicle 1. The seat S may be mounted on a central frame CF that crosses the center of the frame FL. There may be one or more seats S. The seats S may be opposite to each other with respect to the central frame CF. The length and/or angle of the seat S may be freely adjustable.

A first seat S1 and a second seat S2 may be adjacent to a front portion of the central frame CF, and may be coupled to the left and right sides of the central frame CF. The first seat S1 and the second seat S2 may be referred to as first row seats S1, S2 or front seats S1, S2. The first seat S1 may be referred to as a driver's seat S1, and the second seat S2 may be referred to as a passenger seat S2.

A third seat S3 and a fourth seat S4 may be adjacent to a rear portion of the central frame CF, and may be coupled to the left and right sides of the central frame CF. The third seat S3 and the fourth seat S4 may be referred to as second row seats S3, S4 or back seats S3, S4.

A display device 70 may be installed in a housing 3 of the vehicle 1. The display device 70 may include a display 70D that displays an image. For example, the display 70D may include a display panel such as an LCD panel, an LED panel, or an OLED panel. The display 70D may be curved. The display 70D may be referred to as a display unit 70D.

The display 70D may include a center information display (CID). The display 70D may include a center information display CID, a cluster, and a co-driver display (CDD). The cluster may provide information to a driver in the driver's seat S1, the co-driver display may provide information to a passenger in the passenger seat S2, and the center information display may provide information to passengers.

Referring to FIGS. 1 and 2 in order, the area of the display 70D may be expanded. Referring to FIGS. 1 and 2 in reverse order, the area of the display 70D may be reduced. The display 70D in FIG. 1 may be referred to as a normal mode or parking/stopping mode display 70D, and the display 70D in FIG. 2 may be referred to as an extended mode or driving mode display 70D.

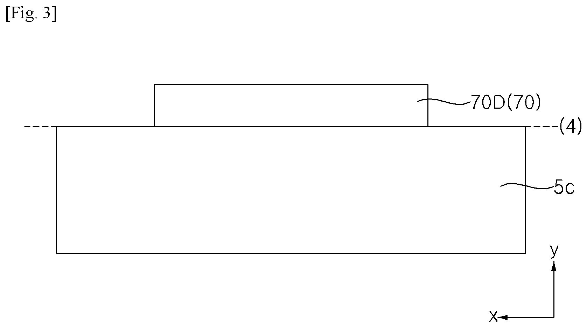

Referring to FIG. 3, a cover 5c of the display device 70 may cover at least a portion of the rear surface of the display 70D. Here, the rear surface of the display 70D may be a surface on which the display 70D displays an image, and may face the cabin 2 (see FIGS. 1 and 2) of the vehicle 1. The upper end of the cover 5c may be aligned with the upper end of a dashboard 4 of the vehicle 1, or positioned slightly below or above it.

For example, a portion of the display 70D not covered by the cover 5c may display basic driving information, weather information, schedule information, etc. of the vehicle 1.

The display device 70 may be referred to as a vehicle display device 70. However, the use of the display device 70 is not limited to vehicles, and the display device 70 may be used in various places such as a home, office, or factory.

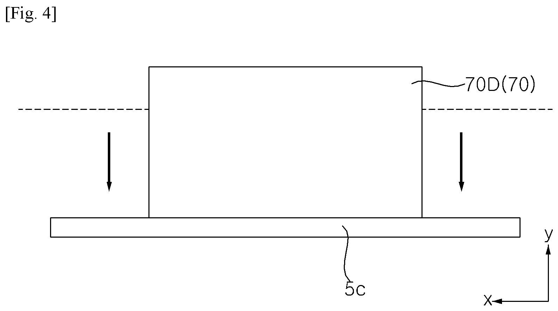

Referring to FIG. 4, the position of the upper end of the cover 5c may be gradually lowered, and the rear surface of the display 70D may be gradually exposed. A portion of the display 70D not covered by the cover 5c may have a maximum height.

For example, the display 70D may output navigation information, movies or music, or videos that help with relaxation.

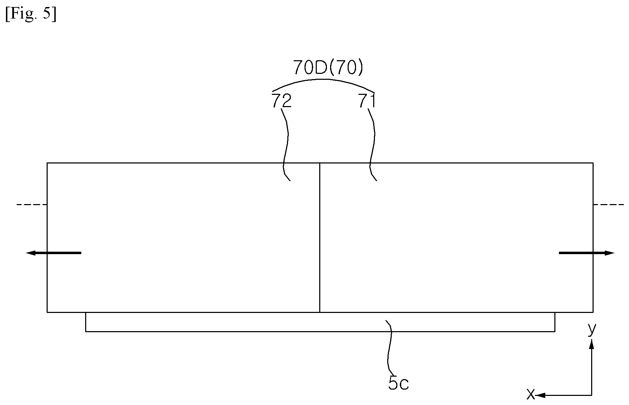

Referring to FIG. 5, the area of the display 70D may be expanded. That is, the mode of the display 70D may be switched from a normal mode (see FIG. 3 and 4) to an expanded mode (see FIG. 5).

For example, the display 70D may provide expanded information that the display 70D of FIG. 4 outputs.

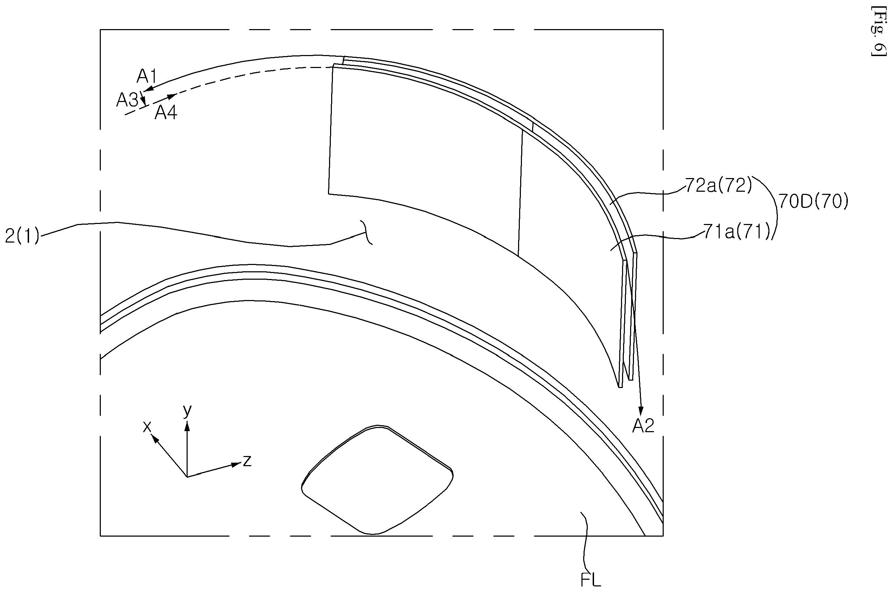

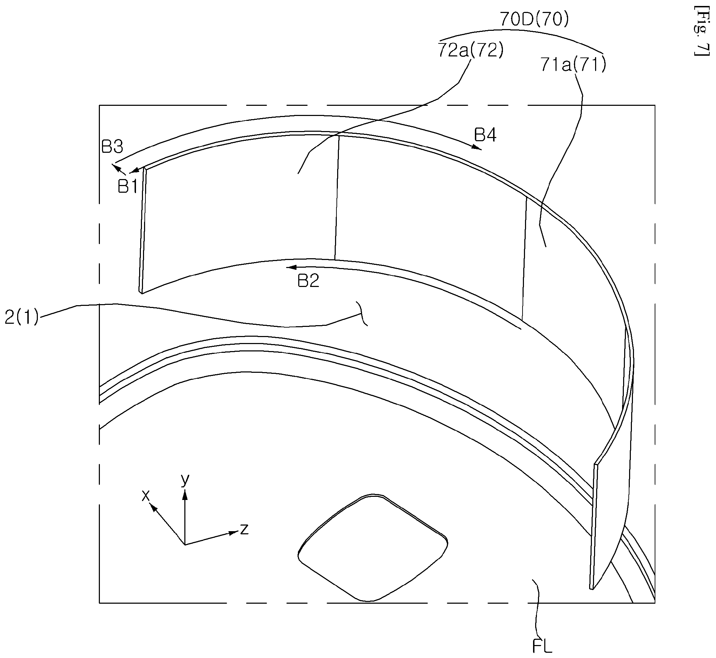

Referring to FIG. 6 and 7, the display 70D may include a first display 71 and a second display 72. The first and second displays 71, 72 may be curved. The first and second displays 71, 72 may have the same curvature.

Referring to FIG. 6, the second display 72 may be positioned in front of the first display 71. A first display panel 71a forming the rear surface of the first display 71 may face the cabin 2 of the vehicle 1, and a second display panel 72a forming the rear surface of the second display 72 may face the front surface of the first display 71. The first and second displays 71, 72 may overlap each other in the front-rear direction, and may be spaced apart from each other. The display 70D of FIG. 6 may be referred to as the display 70D in normal mode.

Referring to FIG. 7, the second display 72 may be positioned next to the first display 71. The first display panel 71a forming the rear surface of the first display panel 71 and the second display panel 72a forming the rear surface of the second display panel 72a may face the cabin 2 of the vehicle 1. The curved surfaces of the first and second displays 71, 72 may be naturally connected. That is, the first and second display panels 71a, 72a of the first and second displays 71, 72 may be positioned on a single virtual curved surface. The display 70D of FIG. 7 may be referred to as the display 70D in an extended mode.

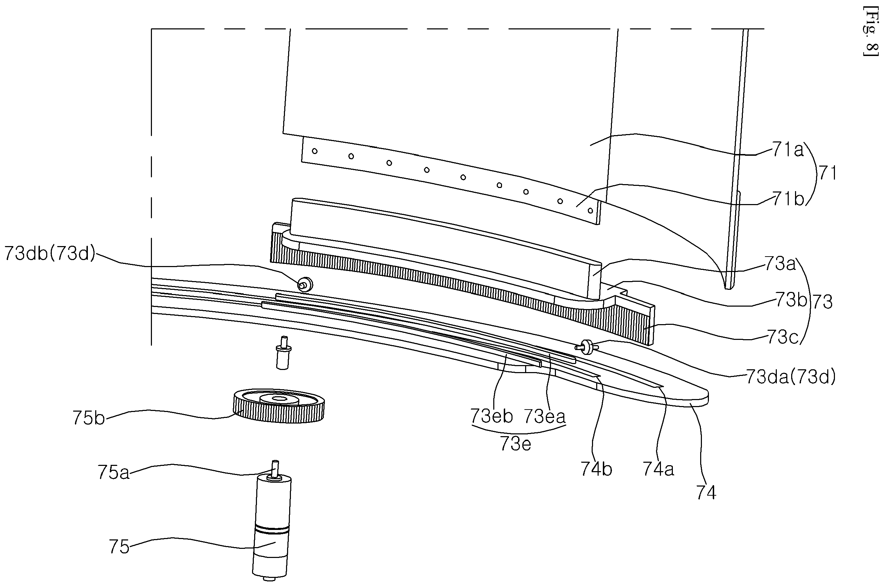

Referring to FIG. 8, a fixed portion 71b of the first display 71 may protrude downward from the lower side of the first display panel 71a of the first display 71, and may be extended along the lower side.

A supporter 73 may be opposite to the first display panel 71a with respect to the fixed portion 71b. The supporter 73 may include a vertical part 73a, a horizontal part 73b, and a rack 73c. The vertical part 73a may be extended along the fixed portion 71b, and the fixed portion 71b may be fixed to the vertical part 73a. The horizontal part 73b may intersect with the lower end of the vertical part 73a, and may be extended along the vertical part 73a. The rack 73c may protrude downward from the horizontal part 73b, and may be extended along the horizontal part 73b. The rack 73c may have gear teeth formed on the rear surface of the rack 73c. The rack 73c may be referred to as a protruding portion 73c.

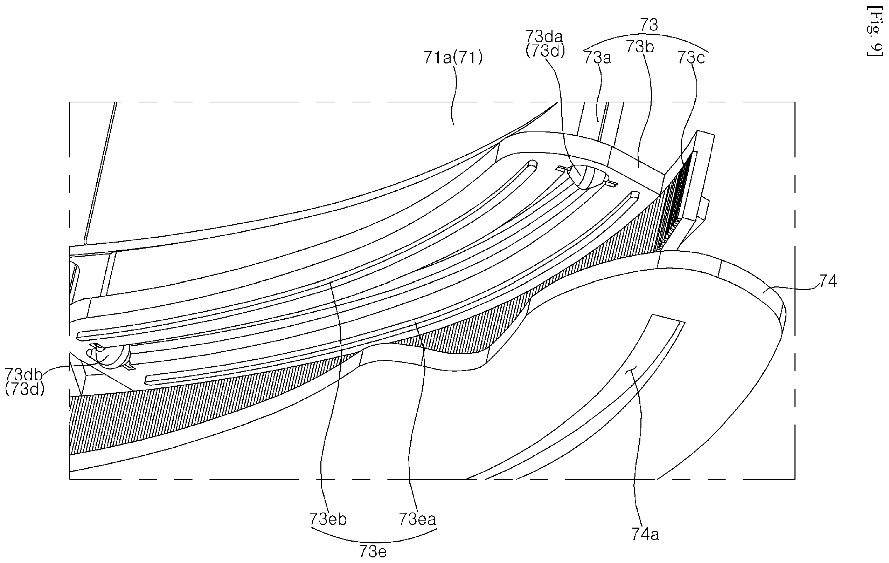

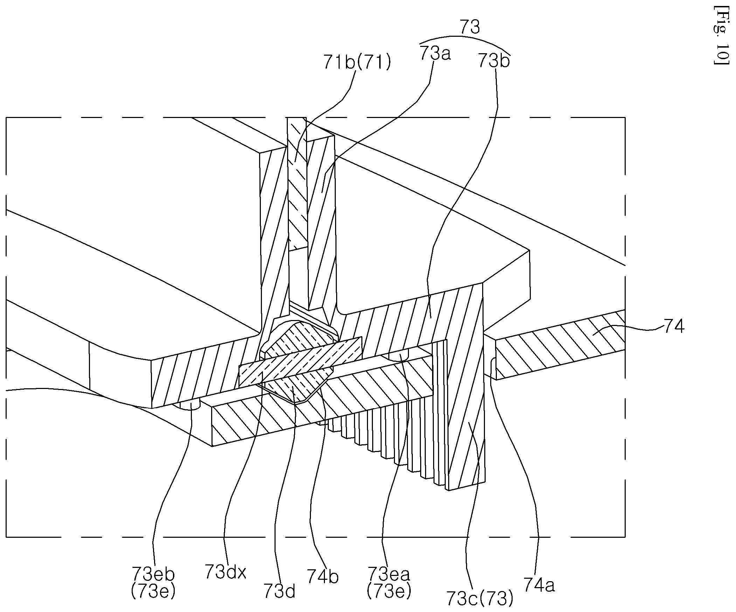

Referring to FIGS. 9 and 10, a first plate 74 may be positioned below the supporter 73, and may be extended along the supporter 73. The first plate 74 may be a portion of the housing 3 (see FIG. 1) of the vehicle 1, or may be coupled to the housing 3. The upper surface of the first plate 74 may support the horizontal part 73b of the supporter 73. A slot 74a may be formed to penetrate the first plate 74 in the thickness direction of the first plate 74, and may be extended along the first display 71 and the supporter 73. The first display 71, the supporter 73, and the slot 74a may be curved.

The rack 73c of the supporter 73 may be movably inserted into the slot 74a of the first plate 74. A portion of the rack 73c may penetrate the slot 74a and protrude to the lower side of the first plate 74.

A roller 73d may be rotatably coupled to the lower surface of the horizontal part 73b facing the first plate 74. The rotation center axis 73dx of the roller 73d may be parallel to the first plate 74. For example, a plurality of rollers 73da, 73db may be arranged along the horizontal part 73b. A groove 74b may be formed on the upper surface of the first plate 74 facing the horizontal part 73b, and may be extended along the horizontal part 73b. The roller 73d may be positioned on the groove 74b of the first plate 74, and may roll and move. Accordingly, the supporter 73 to which the first display 71 is fixed may move smoothly and stably on the first plate 74.

A friction reduction member 73e may be extended along the horizontal part 73b. The friction reduction member 73e may be fixed to the lower surface of the horizontal part 73b facing the first plate 74, and may protrude from the horizontal part 73b toward the first plate 74 to come into contact with the first plate 74. For example, the friction reduction member 73e may include a Poly Oxy Methylene (POM) material. For example, a plurality of friction reduction members 73ea, 73eb may be spaced apart from each other in the width direction of the horizontal part 73b. Accordingly, the friction between the supporter 73 to which the first display 71 is fixed and the first plate 74 may be reduced.

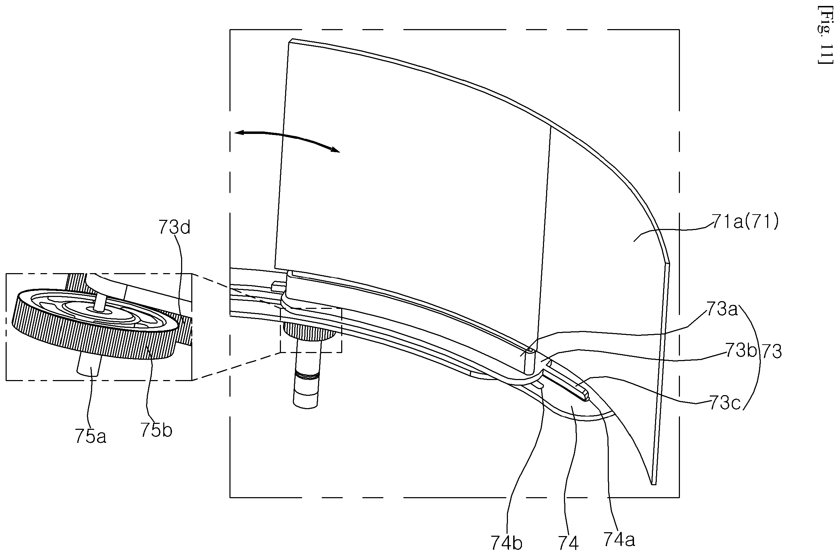

Referring to FIG. 11, a motor 75 may be mounted on the first plate 74 and/or the housing 3 (see FIG. 1). The motor 75 may be positioned below the first plate 74, and may be an electric motor that is able to adjust the rotational direction, rotational speed, and rotational angle of a rotation axis 75a (see FIG. 8).

A pinion 75b may be fixed to the rotation axis 75a of the motor 75, and the rotation axis of the pinion 75b may be parallel to the vertical direction. The pinion 75b may be engaged with the rack 73c of the supporter 73.

Accordingly, when the motor 75 is driven, the supporter 73 and the first display 71 may move along the slot 74a of the first plate 74 (see the bidirectional arrow in FIG. 11).

When the pinion 75b rotates clockwise, the supporter 73 having the rack 73c that engages with the pinion 75b and the first display 71 fixed to the supporter 73 may rotate clockwise along the slot 74a of the first plate 74. That is, the first display 71 may be switched from the normal mode (see FIG. 6) to the extended mode (see FIG. 7).

When the pinion 75b rotates counterclockwise, the supporter 73 having the rack 73c that engages with the pinion 75b and the first display 71 fixed to the supporter 73 may rotate counterclockwise along the slot 74a of the first plate 74. That is, the first display 71 may be switched from the extended mode (see FIG. 7) to the normal mode (see FIG. 6).

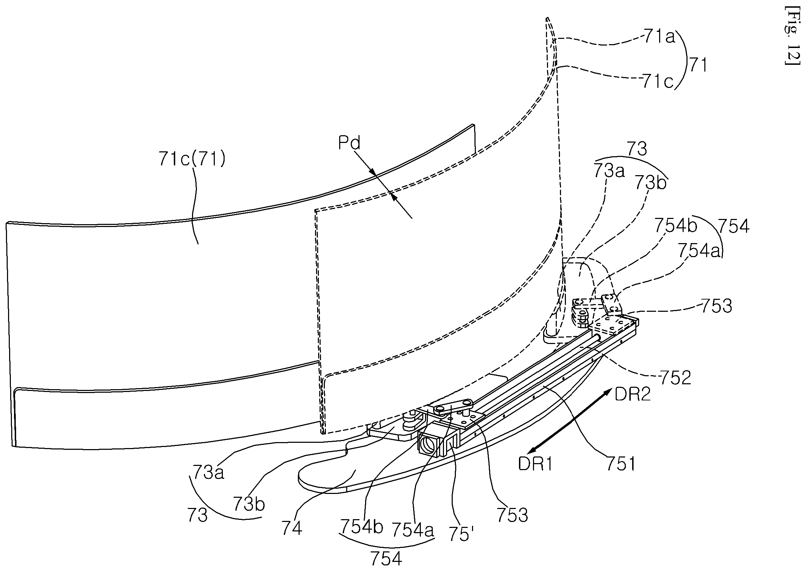

Referring to FIGS. 12 to 14, a first display cover 71c of the first display 71 may be opposite to the first display panel 71a of the first display 71. The first display panel 71a may form the rear surface of the first display 71, and the first display cover 71c may form the front surface of the first display 71.

A fixing portion (not shown) of the first display 71 may protrude downward from the lower side of the first display panel 71a of the first display 71, and may be extended along the lower side.

The supporter 73 may be opposite to the first display panel 71a with respect to the fixed portion, and the supporter 73 may include a vertical part 73a, a horizontal part 73b, and a pin 73c'. The vertical part 73a may be extended along the fixed portion, and the fixed portion may be fixed to the vertical part 73a. The horizontal part 73b may intersect with the lower end of the vertical part 73a, and may be extended along the vertical part 73a. The pin 73c' may protrude downward from the horizontal part 73b.

The first plate 74 may be positioned below the supporter 73, and may be extended along the supporter 73. The first plate 74 may be a portion of the housing 3 (see FIG. 1) of the vehicle 1, or may be coupled to the housing 3. The upper surface of the first plate 74 may support the horizontal part 73b of the supporter 73. The slot 74a may be formed to penetrate the first plate 74 in the thickness direction of the first plate 74, and may be extended along the first display 71 and the supporter 73. The first display 71, the supporter 73, and the slot 74a may be curved.

The pin 73c' of the supporter 73 may be movably inserted into the slot 74a of the first plate 74. A roller or bearing 73cc' may be rotatably coupled to the outer surface of the pin 73c'. The rotation center axis of the roller or bearing 73cc' may be parallel to the axial direction of the pin 73c', i.e., the vertical direction. The pin 73c' may be referred to as a protruding portion 73c'. Accordingly, the pin 73c' may move smoothly along the slot 74a.

A motor 75' may be mounted on the first plate 74. The motor 75' may be an electric motor that is able to adjust the rotational direction, rotational speed, and rotational angle of the rotation axis. The rotation axis of the motor 75' may be parallel to the horizontal direction.

A guide rail 751 may be mounted on the first plate 74, and may be extended long. The longitudinal direction of the guide rail 751 may intersect with the longitudinal direction of the first plate 74. A motor 75' may be mounted on one side of the guide rail 751. The guide rail 751 may include a bottom 751c placed on the upper surface of the first plate 74, and a pair of side walls 751a, 751b protruding from both sides of the bottom 751c.

A lead screw 752 may be extended long along the guide rail 751. One end of the lead screw 752 may be fixed to the rotation axis of the motor 75'. Male screw threads may be formed on the outer surface of the lead screw 752.

A slider 753 may be positioned on the guide rail 751, and may be penetrated by the lead screw 752. Female screw threads may be formed on the inner surface of the hole of the slider 753 through which the lead screw 752 penetrates, and may engage with the male screw threads of the lead screw 752. One side of the slider 753 may be movably coupled to a first side wall 751a of the guide rail 751, and the other side of the slider 753 may be movably coupled to a second side rail 751b of the guide rail 751. A pair of side walls 751a, 751b may restrict the rotation of the slider 753.

A link 754 may connect the slider 753 and the supporter 73. The link 754 may include a first arm 754a and a second arm 754b. One end of the first arm 754a may be pivotably coupled to the slider 753. One end of the second arm 754b may be pivotably coupled to the other end of the first arm 754a. The other end of the second arm 754b may be pivotably coupled to the horizontal part 73b of the supporter 73. The link 754 may be referred to as a foldable link 754.

Accordingly, when the motor 75' is driven, the slider 753 may move in a straight reciprocating motion along the lead screw 752, and the supporter 73 connected the slider 753 through the link 754 and the first display 71 may move along the slot 74a of the first plate 74.

When the slider 753 moves in a first direction DR1, the supporter 73 connected to the slider 753 through the link 754 and the first display 71 fixed to the supporter 73 may be rotated clockwise along the slot 74a of the first plate 74. That is, the first display 71 may be switched from the normal mode (see FIG. 6) to the extended mode (see FIG. 7).

When the slider 753 moves in a second direction DR2, the supporter 73 connected to the slider 753 through the link 754 and the first display 71 fixed to the supporter 73 may be rotated counterclockwise along the slot 74a of the first plate 74. That is, the first display 71 may be switched from the extended mode (see FIG. 7) to the normal mode (see FIG. 6).

In this case, the first display 71 in the normal mode may have a phase difference (see Pd in FIG. 12) between the first display 71 in the extended mode.

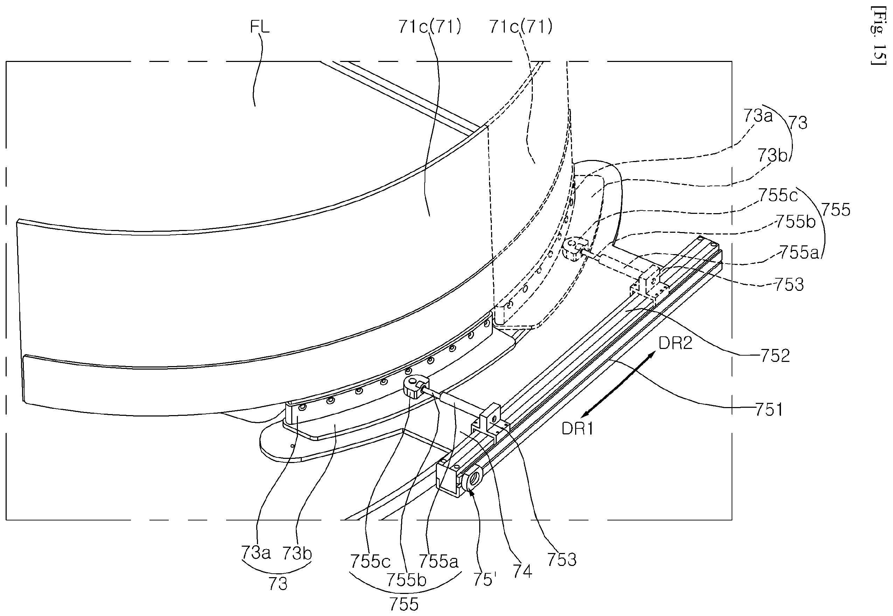

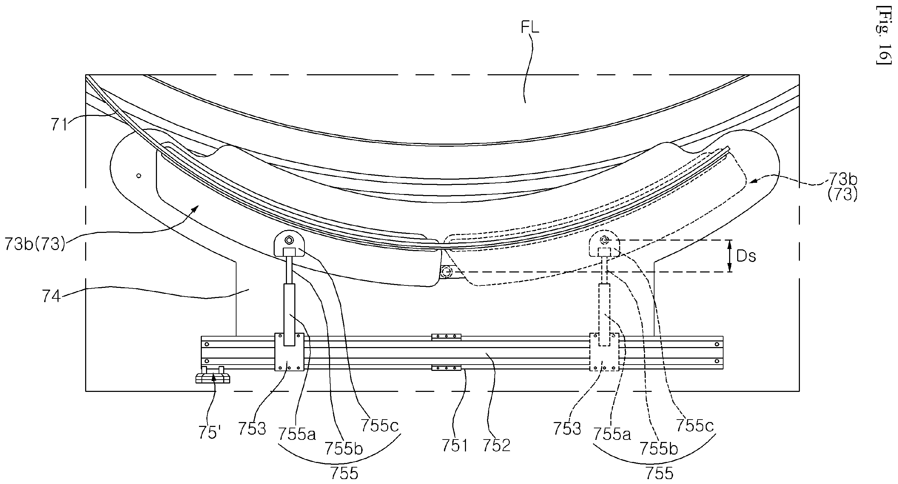

Referring to FIGS. 15 and 16, a gas spring 755 may connect the slider 753 and the supporter 73 in place of the link 754 of FIGS. 12 to 14. The guide rail 751 to which the slider 753 is movably coupled may be extended along a tangential direction of the slot 74a of the first plate 74. The gas spring 755 may include a cylinder 755a and a rod 755b. One end of the cylinder 755a may be fixed to the slider 753. One end of the rod 755b may be positioned inside the cylinder 755a, and the other end of the rod 755b may be rotatably coupled to the supporter 73. An eyelet 755c may form the other end of the rod 755b, and a pin formed in the horizontal part 73b of the supporter 73 may be rotatably inserted and coupled to the eyelet 755c.

The length of the gas spring 755 may be extendable. Specifically, a gas such as compressed nitrogen may be filled inside the cylinder 755a, and a piston (not shown) fixed to one end of the rod 755b may be positioned inside the cylinder 755a. Alternatively, oil may also be filled inside the cylinder 755a along with gas. The piston may patition the internal space of the cylinder 755a into two spaces, and the two spaces may be connected to each other through an orifice formed in the piston. At this time, the area of a first surface of the piston, where one end of the rod 755b is fixed, may be smaller than the area of a second surface of the piston opposite to the first surface. Accordingly, depending on the flow of gas passing through the orifice, the rod 755b may move in a direction inserted into the inside of the cylinder 755a or in the opposite direction.

Accordingly, when the motor 75' is driven, the slider 753 may move in a linear reciprocating motion along the lead screw 752, and the supporter 73 connected to the slider 753 through the gas spring 755 and the first display 71 may move along the slot 74a of the first plate 74.

In addition, the length of the gas spring 755 may vary depending on the position of the slider 753 and the supporter 73. The minimum length of the gas spring 755 may be formed between the normal mode and the extended mode (see the length change amount Ds of the gas spring 755 in FIG. 16).

In this case, there may be no phase difference between the first display 71 in the normal mode and the first display 71 in the extended mode.

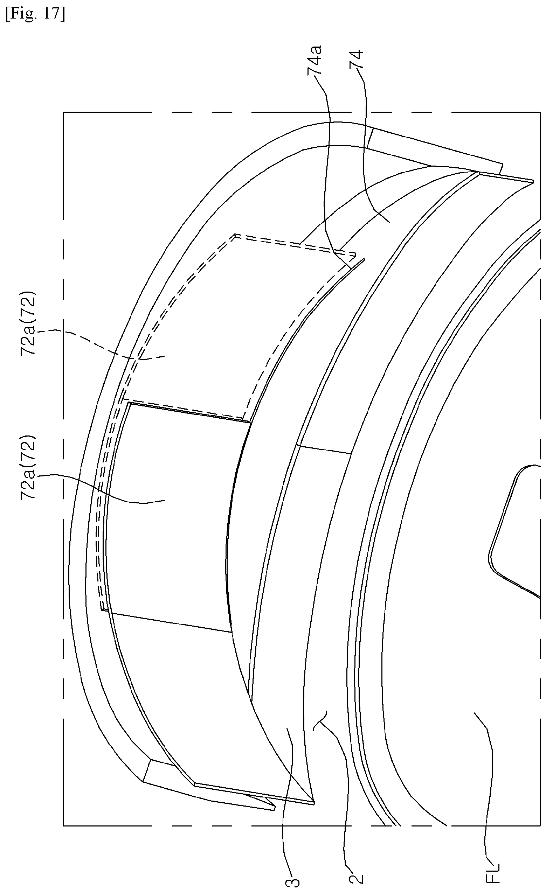

Referring to FIGS. 17 to 19, a second display cover 72c of the second display 72 may be opposite to the second display panel 72a of the second display 72. The second display panel 72a may form the rear surface of the second display 72, and the second display cover 72c may form the front surface of the second display 72.

A fixed portion 72b of the second display 72 may protrude forward from the second display cover 72c while being adjacent to the lower side of the second display 72.

A second rack 76 may be opposite to the second display 72 with respect to the fixed portion 72b. The second rack 76 may be fixed to the distal end of the fixed portion 72b, and the second rack 76 may be extended along the second display 72 from below the fixed portion 72b. The second rack 76 may be provided with gear teeth formed on the rear surface of the second rack 76. The second rack 76 may be referred to as a protruding portion 76.

A second plate 77 may be positioned below the second display 72, and may be extended along the second display 72. The second plate 77 may be movably coupled to the housing 3 (see FIG. 1) of the vehicle 1. The slot 77a may be formed to penetrate the plate 77 in the thickness direction of the plate 77, and may be extended along the second display 72 and the second rack 76. The second display 77, the second rack 76, and the slot 77a may be curved.

The second rack 76 may be movably inserted into the slot 77a of the second plate 77. A portion of the second rack 76 may penetrate the slot 77a and may protrude to the lower side of the second plate 77.

The upper surface of the first plate 74 may support the lower end of the second display 72. The first plate 74 may be referred to as a fixed plate 74, and the second plate 77 may be referred to as a moving plate 77.

The roller 72d may be rotatably coupled to the lower side of the second display 72 facing the first plate 74. The rotation center axis 72dx of the roller 72d may be parallel to the first plate 74. For example, a plurality of rollers 72d may be arranged along the lower side of the second display 72. Accordingly, the second display 72 may move smoothly and stably on the first plate 74.

A first motor 78 may be mounted on the first plate 74 and/or the housing 3 (FIGS. 1 and 2). The first motor 78 may be adjacent to the second plate 77. The rotation axis 78a of the first motor 78 may be an electric motor that is able to adjust the rotational direction, rotational speed, and rotational angle. A first pinion 78b may be fixed to the rotation axis 78a of the first motor 78, and the rotation axis of the first pinion 78b may be parallel to the horizontal direction. The rotation axis of the first pinion 78b may be parallel to the tangential direction of the second plate 77. A first rack 77c may protrude in a radial direction of the second plate 77 from the second plate 77. The first pinion 78b may be positioned on the first rack 77c, and may mesh with the gear teeth formed on the first rack 77c. The first rack 77c may be referred to as a protruding portion 77c.

Accordingly, when the first motor 78 is driven, The second plate 77 on which the first rack 77c is formed, and the second display 72 coupled to the second plate 77 through the second rack 76 may move along a direction parallel to the first rack 77c.

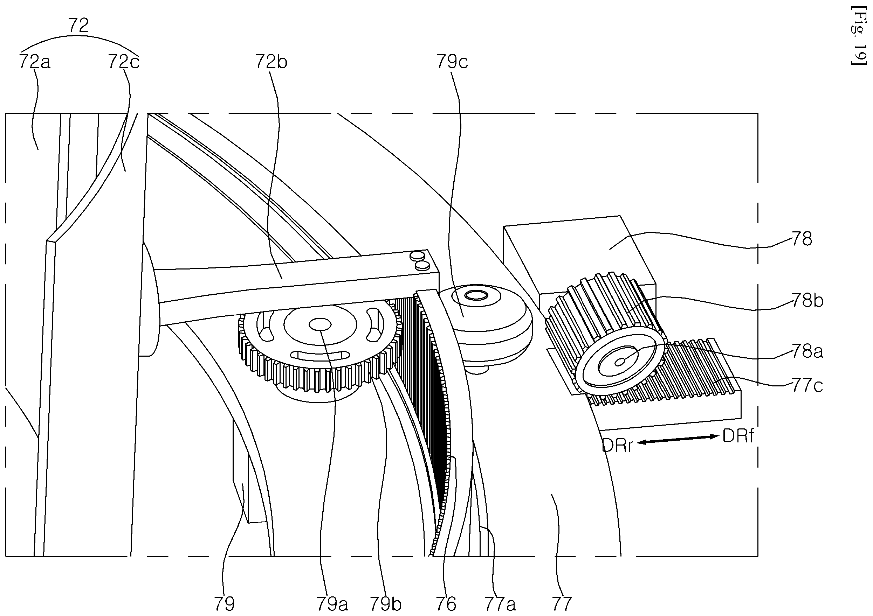

When the first pinion 78b rotates clockwise, the second plate 77 having the first rack 77c engaged with the first pinion 78b and the second display 72 coupled to the second plate 77 may move rearward (see DRr in FIG. 19).

When the first pinion 78b rotates counterclockwise, the second plate 77 having the first rack 77c engaged with the first pinion 78b and the second display 72 coupled to the second plate 77 may move forward (see DRf in FIG. 19).

A second motor 79 may be mounted on the second plate 77. The second motor 79 may be mounted on one surface (e.g., the lower surface) of the second plate 77. The second motor 79 may be an electric motor that is able to adjust the rotational direction, rotational speed, and rotational angle of the rotation axis 79a. A second pinion 79b may be fixed to the rotation axis 79a of the second motor 79, and the rotation axis of the second pinion 79b may be parallel to the vertical direction. The second pinion 79b may be engaged with the second rack 76. For example, an auxiliary roller 79c mounted on the second plate 77 may be opposite to the second pinion 79b with respect to the second rack 76, and may be rotatable around an axis parallel to the vertical direction. The auxiliary roller 79c may come into contact with the second rack 76, and the second rack 76 may move stably between the second pinion 79b and the auxiliary roller 79c.

Accordingly, when the second motor 79 is driven, the second rack 76 and the second display 72 fixed to the second rack 76 may move along the slot 77a of the second plate 77.

When the second pinion 79b rotates counterclockwise, the second rack 76 engaged with the second pinion 79b and the second display 72 fixed to the second rack 76 may rotate counterclockwise along the slot 77a of the second plate 77. That is, the second display 72 may be switched from the normal mode (see FIG. 6) to the extended mode (see FIG. 7).

When the second pinion 79b rotates clockwise, the second rack 76 engaged with the second pinion 79b and the second display 72 fixed to the second rack 76 may be rotated clockwise along the slot 77a of the second plate 77. That is, the second display 72 may be switched from the extended mode (see FIG. 7) to the normal mode (see FIG. 6).

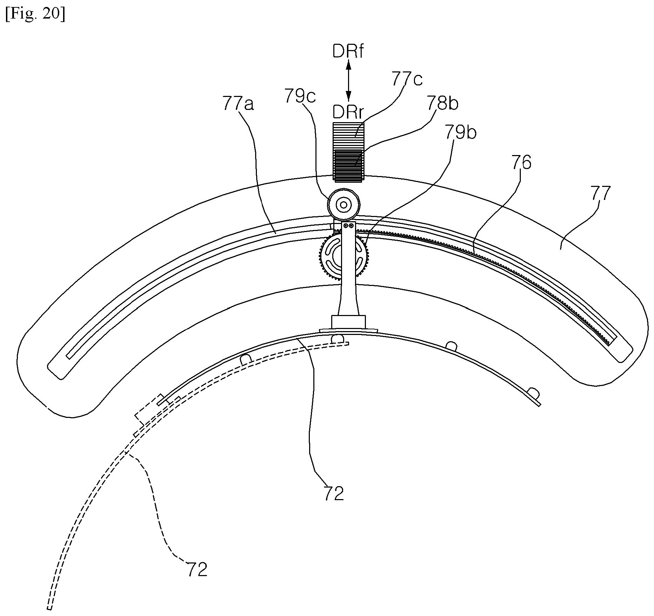

Referring to FIG. 20 together with FIGS. 6 and 7, the display 70D may be switched to the normal mode or the extended mode through the following mechanism.

The first and second displays 71, 72 of the display 70D in the normal mode of FIG. 6 may be overlapped closely one upon the other, and the second display 72 may be positioned in front of the first display 71.

First, the second display 72 may be rotated counterclockwise along the slot 77a of the second plate 77, through the engagement structure of the second pinion 79b and the second rack 76 described above (see A1 in FIG. 6). Simultaneously with or at the different time from such a rotation (see A1 in FIG. 6) of the second display 72, the first display 71 may be rotated clockwise along the slot 74a (see FIG. 17) of the first plate 74 (see A2 in FIG. 6). Then, the second display 72, through the engagement structure of the first pinion 78b and the first rack 77c described above, may be moved rearward (see DRr in FIG. 20 and A3 in FIG. 6), and as a result, the center of curvature of the second display 72 may be concentric with the center of curvature of the first display 71. Then, the second display 72, through the engagement structure of the second pinion 79b and the second rack 76 described above, may be rotated clockwise along the slot 77a of the second plate 77 (see A4 in FIG. 6), and as a result, the second display 72 may be in close contact with and aligned with the first display 71.

Accordingly, the display 70D may be switched from the normal mode of FIG. 6 to the extended mode of FIG. 7. The aforementioned mechanism can be identically applied to switch the display 70D in the normal mode of FIGS. 21 and 22 described later to the display 70D in the extended mode of FIGS. 23 and 24.

The first and second displays 71, 72 of the display 70D in the extended mode of FIG. 7 may be positioned on a single virtual curved surface.

First, the second display 72 may be rotated counterclockwise along the slot 77a of the second plate 77 through the engagement structure of the second pinion 79b and the second rack 76 described above, and as a result, the second display 72 may be separated from the first display 71 (see B1 in FIG. 7). Then, the second display 72 may be moved forward through the engagement structure of the first pinion 78b and the first rack 77c described above (see DRf in FIG. 20 and B3 in FIG. 7), and as a result, the center of curvature of the second display 72 may be eccentric with respect to the center of curvature of the first display 71. Then, the second display 72 may be rotated clockwise along the slot 77a of the second plate 77 through the engagement structure of the second pinion 79b and the second rack 76 described above (see B4 in FIG. 7). Simultaneously with or at the different time from such a rotation of the second display 72, the first display 71 may be rotated counterclockwise along the slot 74a (see FIG. 17) of the first plate 74 (see B2 in FIG. 7). When the rotation of the first and second displays 71, 72 is completed, the first and second displays 71, 72 may be overlapped closely one upon the other, and the second display 72 may be positioned in front of the first display 71.

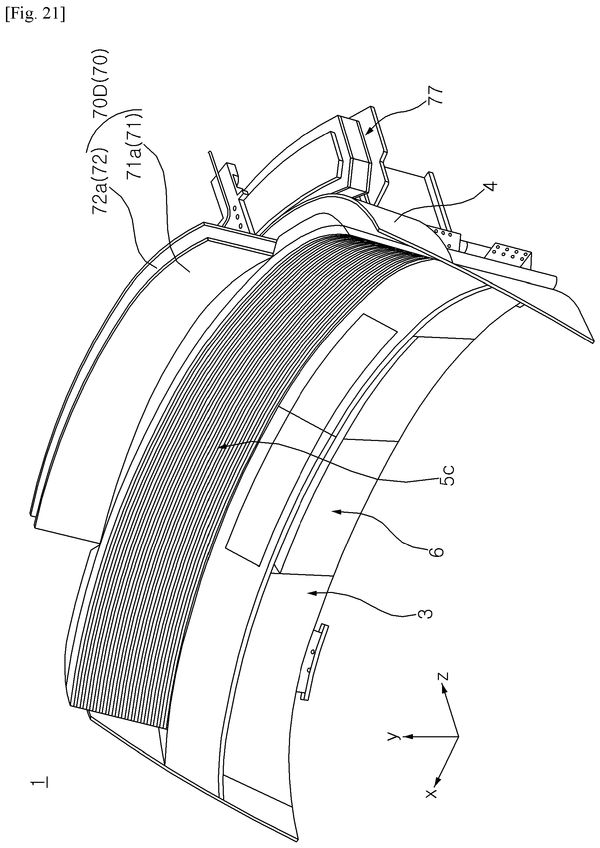

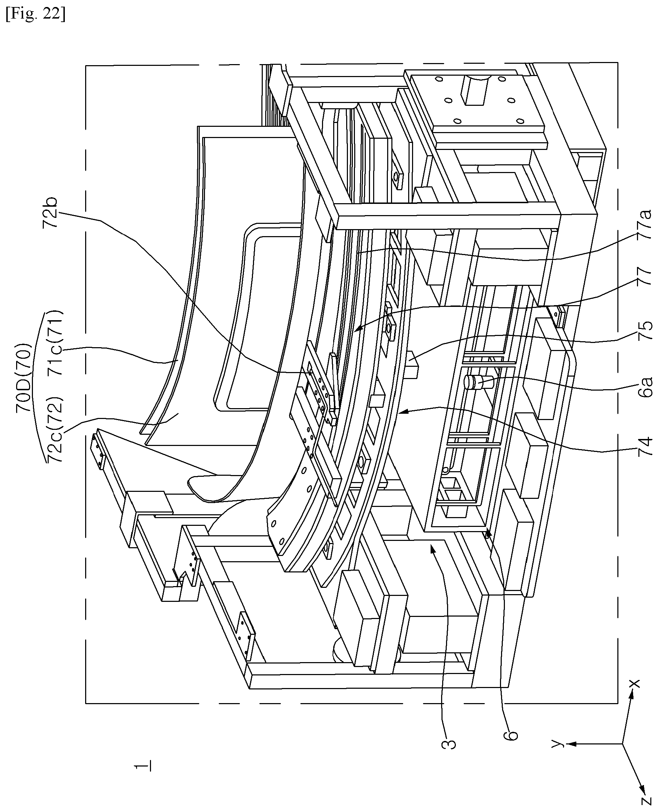

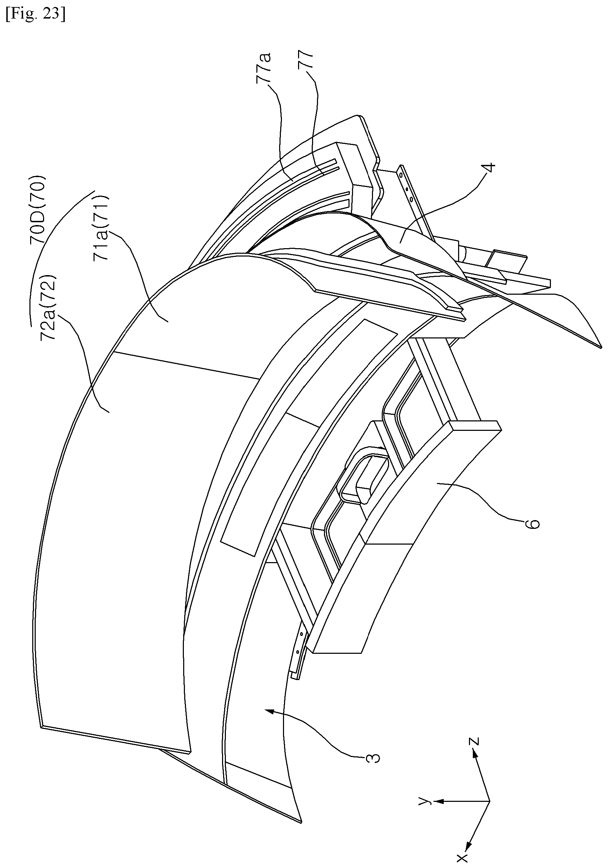

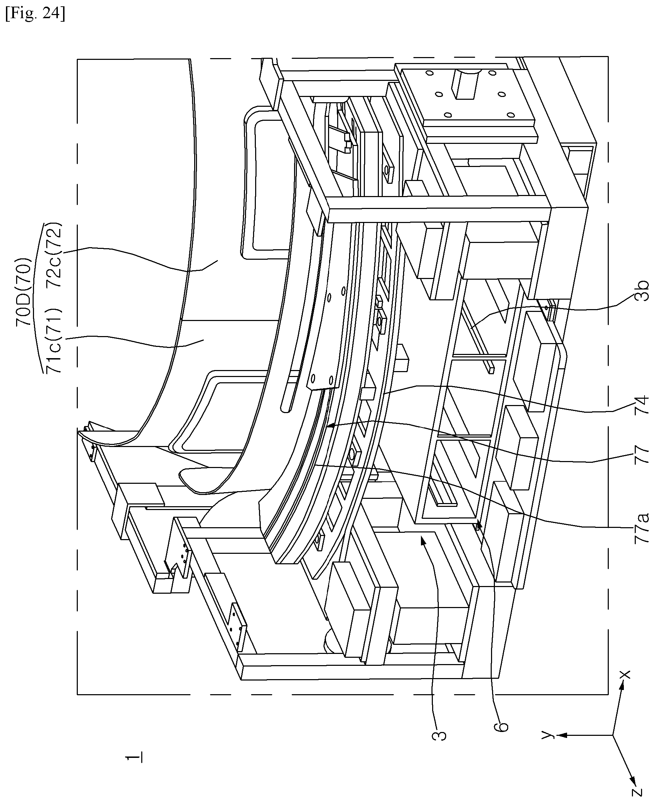

Accordingly, the display 70D may be switched from the extended mode of FIG. 7 to the normal mode of FIG. 6. The aforementioned mechanism can be identically applied to switch the display 70D in the extended mode of FIGS. 23 and 24 described below to the display 70D in the normal mode of FIGS. 21 and 22.

Meanwhile, unlike the above and below, the positions of the first and second displays 71, 72 may be interchanged, and in this case, the mechanism described above may be applied to the first and second displays 71, 72 in opposite directions.

Referring to FIGS. 21 and 22, the cover 5c may cover at least a portion of the rear surface of the display 70D in the normal mode on the housing 3. The cover 5c may be referred to as a blind 5c.

Referring to FIGS. 23 and 24, the cover 5c may be inserted into the housing 3, and may not cover the rear surface of the display 70D. At this time, the display 70D may be in an extended mode.

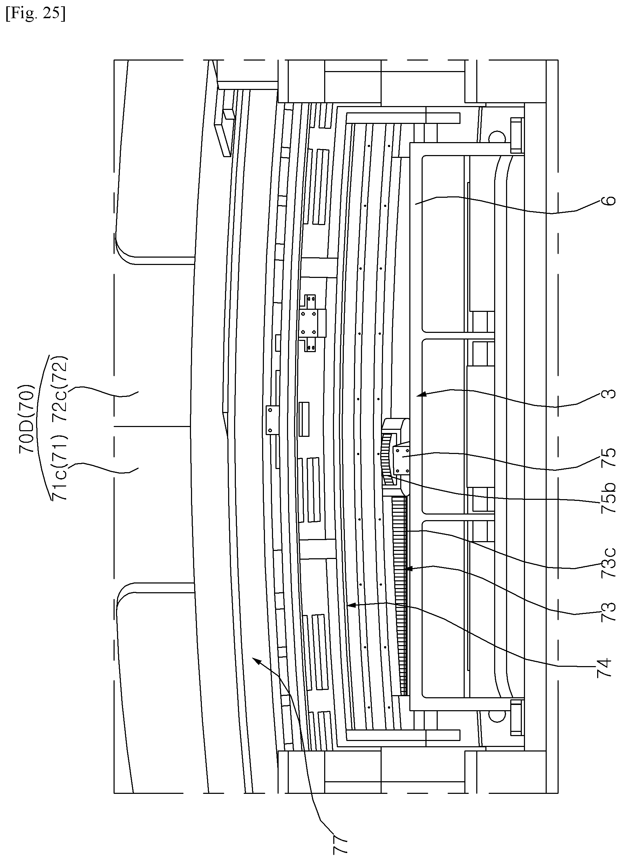

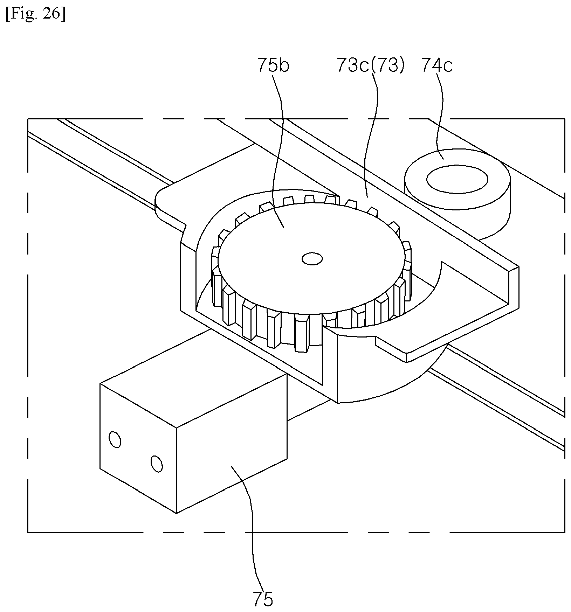

Referring to FIGS. 25 and 26, the first plate 74 may be positioned inside the housing 3, and may be fixed to the housing 3. The supporter 73 may be coupled to the first plate 74 to be movable in the moving direction of the first display 71 inside the housing 3. The rack 73c of the supporter 73 may be curved, and may be convex toward the front. The rack 73c may have gear teeth formed on the front surface of the rack 73c (see FIGS. 25 and 26). Alternatively, the rack 73c may have gear teeth formed on the rear surface of the rack 73c (see FIG. 11).

The motor 75 may be mounted on the first plate 74, and the pinion 75b may be fixed to the rotation axis of the motor 75. The pinion 75b may be engaged with the rack 73c of the supporter 73, and the supporter 73 may move in response to the rotation of the pinion 75b. The pinion 75b (see FIGS. 25 and 26) engaged with the front surface of the rack 73c may rotate in a first rotational direction to move the supporter 73 in a specific direction, and the pinion 75b (see FIG. 11) engaged with the rear surface of the rack 73c may rotate in a second rotational direction opposite to the first rotational direction to move the supporter 73 in the specific direction. An auxiliary roller 74c mounted on the first plate 74 may be opposite to the pinion 75b with respect to the rack 73c, and may come into contact with the rack 73c to support the movement of the rack 73c.

When the pinion 75b rotates counterclockwise, the supporter 73 having the rack 73c that engages with the pinion 75b and the first display 71 fixed to the supporter 73 may be rotated clockwise. That is, the first display 71 may be switched from the normal mode (see FIGS. 21 and 22) to the extended mode (see FIGS. 23 and 24).

When the pinion 75b rotates clockwise, the supporter 73 having the rack 73c that engages with the pinion 75b and the first display 71 fixed to the supporter 73 may be rotated counterclockwise. That is, the first display 71 may be switched from the extended mode (see FIGS. 23 and 24) to the normal mode (see FIGS. 21 and 22).

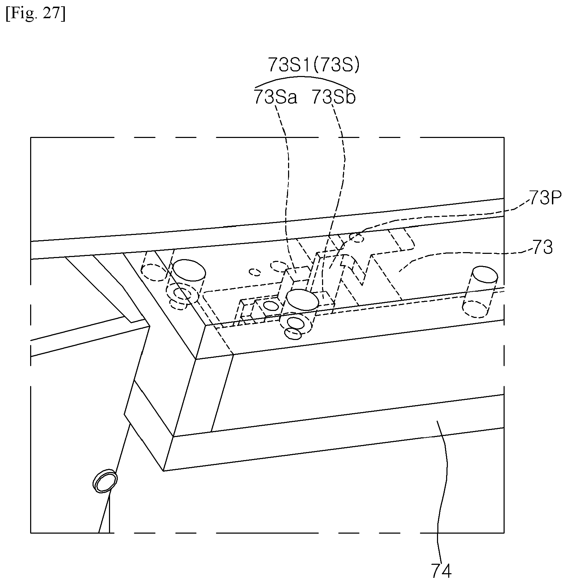

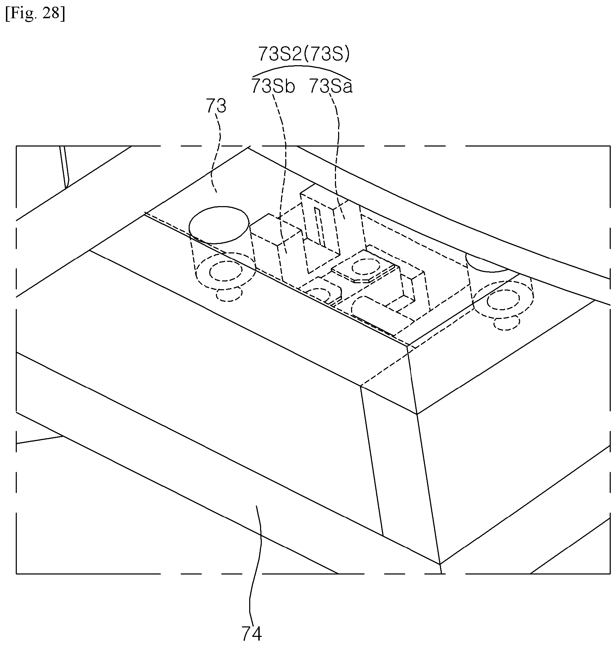

Referring to FIGS. 27 and 28, the sensor 73S may detect the position of the supporter 73. For example, the sensor 73S may be a photo sensor, and may include a light-emitting part 73Sa and a light-receiving part 73Sb that face each other. However, the type of sensor 73S is not limited thereto, and various types of sensors such as proximity sensor, Hall sensor, and limit switch may detect the position of the supporter 73. The sensor 73S, which is equipped with the light-emitting part 73Sa and the light-receiving part 73Sb, may have an overall horseshoe shape. The light-emitting part 73Sa may provide light in an infrared wavelength range toward the light-receiving part 73Sb.

Referring to FIG. 27, a protrusion 73P may be formed at one end of the supporter 73. When the protrusion 73P is positioned between the light-emitting part 73Sa and the light-receiving part 73Sb, the light from the light-emitting part 73Sa may be blocked by the protrusion 73P, and as a result, a first sensor 73S1 may detect the position of the supporter 73. Accordingly, a controller may adjust the operation of the motor 75 on the basis of information obtained from the first sensor 73S1. For example, the controller may stop the movement of the supporter 73 when the protrusion 73P is detected by the first sensor 73S1.

Referring to FIG. 28, a protrusion may be formed at the other end of the supporter 73. When the protrusion is positioned between the light-emitting part 73Sa and the light-receiving part 73Sb, the light from the light-emitting part 73Sa may be blocked by the protrusion, and as a result, a second sensor 73S2 may detect the position of the supporter 73. Accordingly, the controller may adjust the operation of the motor 75 on the basis of information obtained from the second sensor 73S2. For example, the controller may stop the movement of the supporter 73 when the protrusion is detected by the second sensor 73S2.

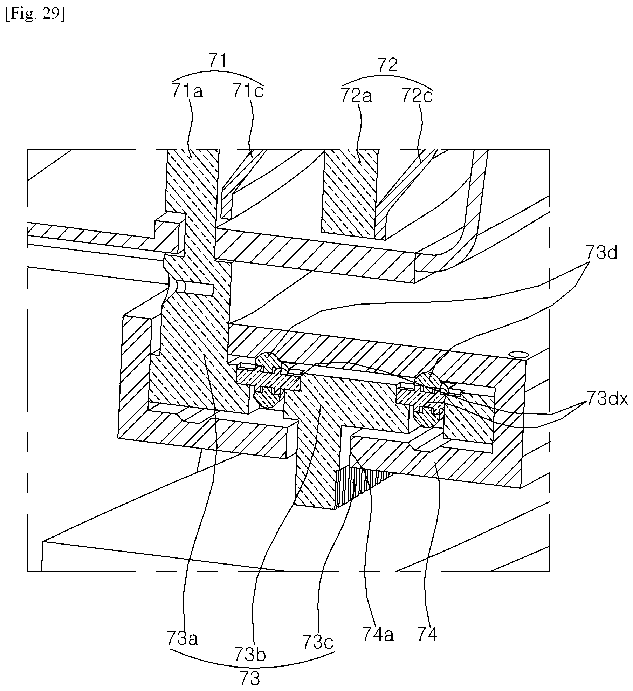

Referring to FIG. 29, a plurality of rollers 73d may be rotatably coupled to the horizontal part 73b of the supporter 73, and may move along the first plate 74. The rotation center axis 73dx of the rollers 73d may be parallel to the first plate 74. Accordingly, the supporter 73 to which the first display 71 is fixed may move smoothly and stably along the slot 74a of the first plate 74.

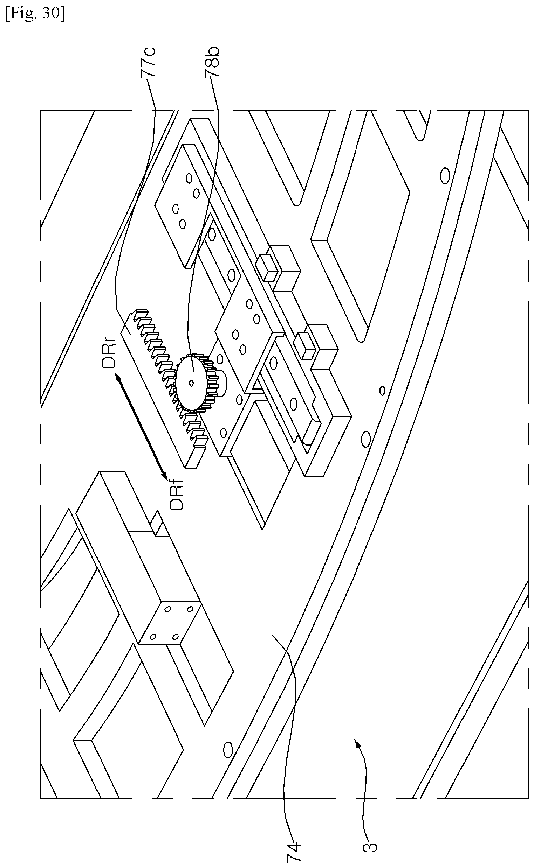

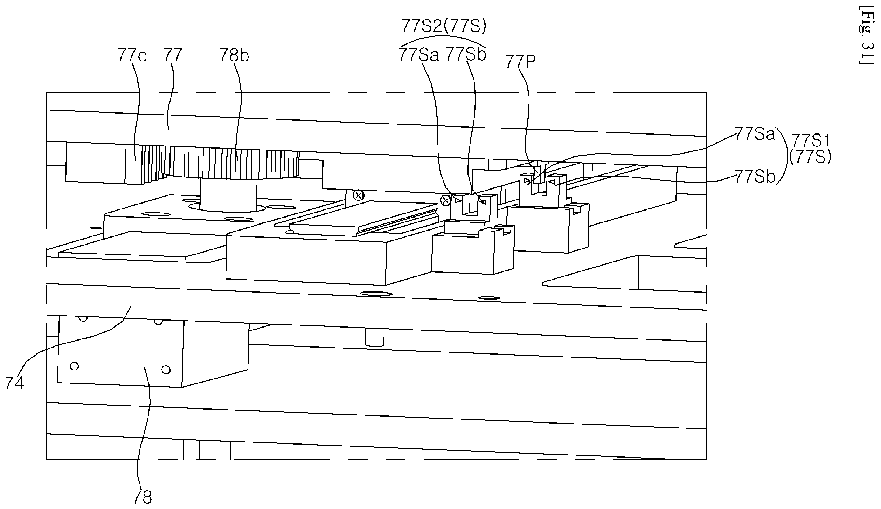

Referring to FIGS. 30 and 31, the second plate 77 may be positioned inside the housing 3, and positioned above the first plate 74. The second plate 77 may be coupled to the housing 3 to be movable back and forth. For example, the roller(s) mounted on the second plate 77 may roll on the first plate 74, thereby allowing the second plate 77 to move back and forth smoothly. The second plate 77 may be curved, and may be convex forward. The first rack 77c may be fixed to the lower surface of the second plate 77, and may be extended in a radial direction (i.e., front-rear direction) of the second plate 77. The first rack 77c may be equipped with gear teeth formed on the side surface of the first rack 77c.

The first motor 78 may be mounted on the first plate 74, and the first pinion 78b may be fixed to the rotation axis of the first motor 78. The first pinion 78b may be engaged with the first rack 77c, and the second plate 77 may move in response to the rotation of the first pinion 78b.

When the first pinion 78b rotates clockwise, the second plate 77, to which the first rack 77c engaged with the first pinion 78b is fixed, and the second display 72 coupled to the second plate 77 may move rearward (see DRr in FIG. 28). The second plate 77 and the second display 72 may move rearward as a portion of the process of switching the mode of the display 70D from the normal mode (see FIGS. 21 and 22) to the extended mode (see FIGS. 23 and 24) (see A2 in FIG. 6).

When the first pinion 78b rotates counterclockwise, the second plate 77 to which the first rack 77c engaged with the first pinion 78b is fixed, and the second display 72 coupled to the second plate 77 may move forward (see DRf in FIG. 28). The second plate 77 and the second display 72 may move forward as a portion of the process of switching the mode of the display 70D from the extended mode (see FIGS. 23 and 24) to the normal mode (see FIGS. 21 and 22) (see B3 in FIG. 7).

A sensor 77S may be mounted on the first plate 74, and may detect the position of the second plate 77. For example, the sensor 77S may be a photo sensor, and may include a light-emitting part 77Sa and a light-receiving part 77Sb that face each other. However, the type of sensor 77S is not limited thereto, and various types of sensors such as proximity sensor, Hall sensor, and limit switch may detect the position of the second plate 77. The sensor 77S equipped with the light-emitting part 77Sa and the light-receiving part 77Sb may have an overall horseshoe shape. The light-emitting part 77Sa may provide light in an infrared wavelength range toward the light-receiving part 77Sb. The sensor 77S may include a first sensor 77S1 and a second sensor 77S2 spaced forward from the first sensor 77S1. A protrusion 77P may protrude from the lower surface of the second plate 77.

When the protrusion 77P is positioned between the light-emitting part 77Sa and the light-receiving part 77Sb, the light from the light-emitting part 77Sa may be blocked by the protrusion 77P, and as a result, the first sensor 77S1 may detect the position of the supporter 73. Accordingly, the controller may adjust the operation of the first motor 78 on the basis of the information obtained from the first sensor 77S1. For example, the controller may stop the movement toward the rear of the second plate 77, when the protrusion 77P is detected by the first sensor 77S1.

When the protrusion 77P is positioned between the light-emitting part 77Sa and the light-receiving part 77Sb, the light from the light-emitting part 77Sa may be blocked by the protrusion 77P, and as a result, the second sensor 77S2 may detect the position of the supporter 73. Accordingly, the controller may adjust the operation of the first motor 78 on the basis of information obtained from the first sensor 77S1. For example, the controller may stop the movement toward the front of the second plate 77, when the protrusion 77P is detected by the second sensor 77S2.

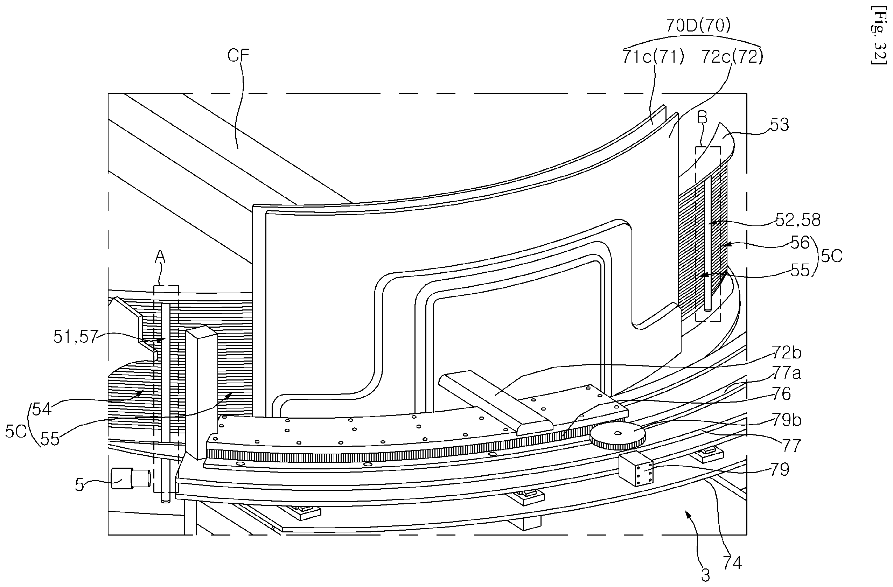

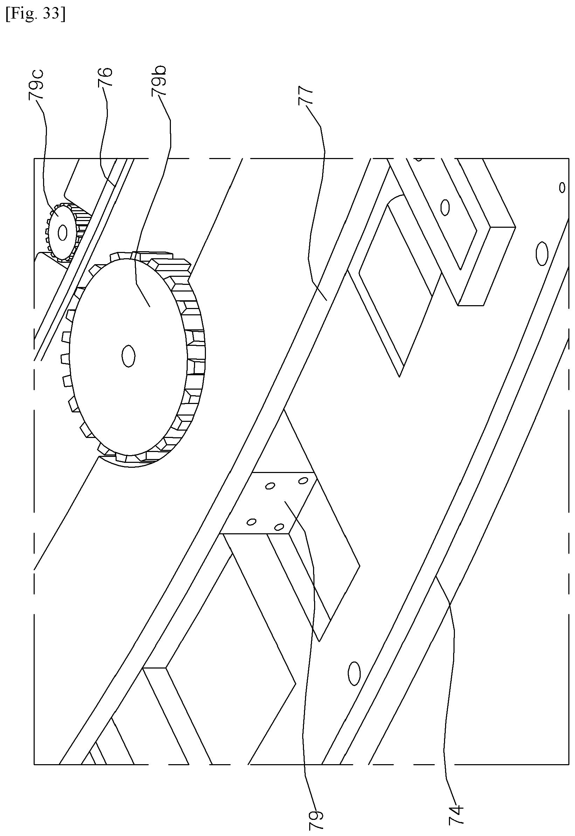

Referring to FIGS. 32 and 33, the second rack 76 may be curved along the slot 77a of the second plate 77, and may be movably inserted into the slot 77a of the second plate 77. The second rack 76 may be fixed to the second display 72 through the fixed portion 72b. For example, the roller(s) mounted on the fixed portion 72b may roll on the second plate 77, thereby allowing the second display 72 to move smoothly in the circumferential direction. The second rack 76 may have gear teeth formed on the front surface of the second rack 76. Alternatively, the second rack 76 may have gear teeth formed on the rear surface of the second rack 76 (see FIG. 19).

The second motor 79 may be mounted on the second plate 77, and the second pinion 79b may be fixed to the rotation axis of the second motor 79. The second pinion 79b may be engaged with the second rack 76, and the second rack 76 may move in response to the rotation of the second pinion 79b. The second pinion 79b (see FIGS. 30 and 31) engaged with the front surface of the second rack 76 may rotate in a first rotational direction to move the second rack 76 in a specific direction, and the second pinion 79b (see FIG. 19) engaged with the rear surface of the second rack 76 may rotate in a second rotational direction opposite to the first rotational direction to move the second rack 76 in the specific direction. The auxiliary roller 79c mounted on the second plate 77 may be opposite to the second pinion 79b with respect to the second rack 76, and may come into contact with the second rack 76 to support the movement of the second rack 76.

When the second pinion 79b rotates clockwise, the second rack 76 engaged with the second pinion 79b and the second display 72 fixed to the second rack 76 may be rotated counterclockwise. That is, the second display 72 may be switched from the normal mode (see FIGS. 21 and 22) to the extended mode (see FIGS. 23 and 24).

When the second pinion 79b rotates counterclockwise, the second rack 76 engaged with the second pinion 79b and the second display 72 fixed to the second rack 76 may be rotated clockwise. That is, the second display 72 may be switched from the extended mode (see FIGS. 23 and 24) to the normal mode (see FIGS. 21 and 22).

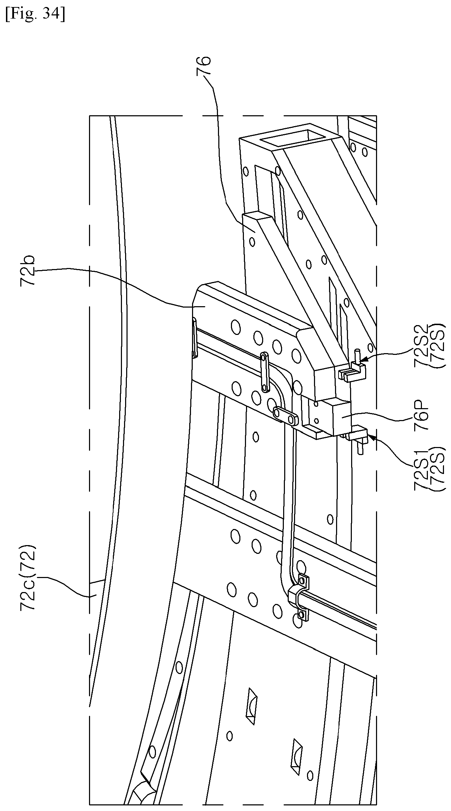

Referring to FIG. 34, the sensor 72S may detect the position of the fixed portion 72b. For example, the sensor 72S may be a photo sensor, and may include a light-emitting part and a light-receiving part that face each other. However, the type of sensor 72S is not limited thereto, and various types of sensors such as proximity sensor, Hall sensor, and limit switch may detect the position of the fixed portion 72b. The sensor 72S having the light-emitting part and the light-receiving part may have an overall horseshoe shape. The light-emitting part may provide light in an infrared wavelength range toward the light-receiving part.

A protrusion may be formed on one side of the fixed portion 72b. When the protrusion is positioned between the light-emitting part and the light-receiving part, the light from the light-emitting part may be blocked by the protrusion, and as a result, the sensor 72S may detect the position of the fixed portion 72b. Accordingly, the controller may adjust the operation of the second motor 79 on the basis of information obtained from the sensor 72S. For example, the controller may stop the movement of the fixed portion 72b when the protrusion is detected by the sensor 72S.

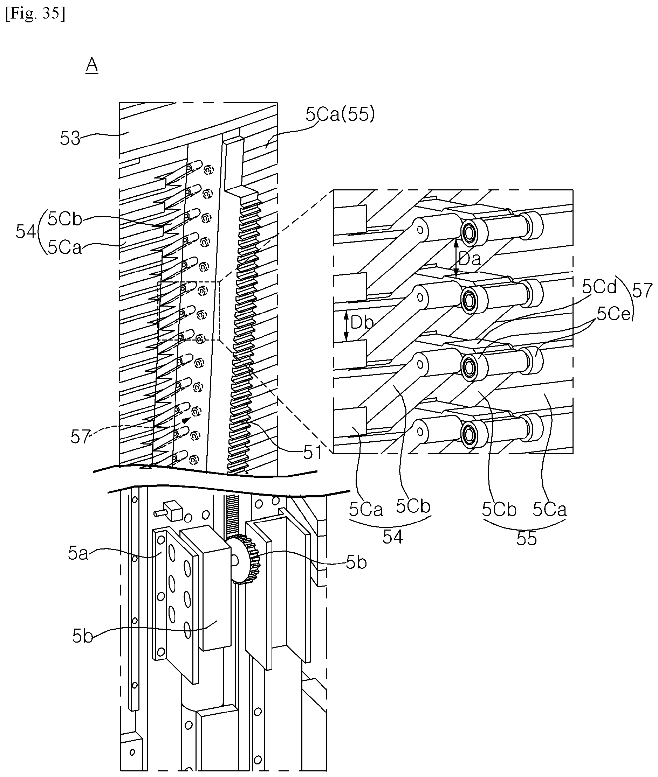

Referring to FIGS. 32 and 35, a vertical rack 51, 52 may be extended vertically, and may be coupled to the housing 3 to be movable vertically. The top 3T of the housing 3 may have a hole 3h through which the vertical rack 51, 52 passes. The motor 5 may be mounted inside the housing 3 through the bracket 5a. The motor 5 may be an electric motor that is able to adjust the rotational direction, rotational angle, and rotational speed of the rotation axis. The pinion 5b may be fixed to the rotation axis of the motor 5, and may be engaged with the vertical rack 51, 52. Accordingly, when the motor 5 is driven, the vertical rack 51, 52 may ascend or descend by the pinion 5b. A first assembly of the motor 5, pinion 5b, and a first vertical rack 51, and a second assembly of the motor 5, pinion 5b, and a second vertical rack 52 may be provided on the left and right sides.

A top frame 53 may be extended in a direction intersecting with the vertical rack 51, 52, and may be fixed to the upper end of the vertical racks 51, 52. The top frame 53 may be curved along the display 70D. The first vertical rack 51 may be adjacent to one end of the top frame 53, and the second vertical rack 52 may be adjacent to the other end of the top frame 53.

The cover 5c may be extended in a direction intersecting with the vertical rack 51, 52, and may be coupled to the vertical racks 51, 52 below the top frame 53. The cover 5c may be curved along the top frame 53. The cover 5c may ascend or descend together with the vertical rack 51, 52. The cover 5c may include a first grille 54, a second grille 55, a third grille 56, a first spine 57, and a second spine 58.

The first spine 57 may be positioned at the rear of the first vertical rack 51, and may be coupled to the lower side of the top frame 53.

The second spine 58 may be positioned at the rear of the second vertical rack 52, and may be coupled to the lower side of the top frame 53.

Each of the first and second spines 57, 58 may include a plurality of discs 5Cd arranged along the vertical direction. The discs 5Cd may be extended forward and backward. A roller 5Ce may be mounted on one side or both sides of the disc 5Cd, and may rotate on the rear surface of the vertical rack 51, 52. The lowest disc 5Cd among the plurality of discs 5Cd may be seated on the upper surface of the horizontal frame inside the housing 3. Thus, since the position of the lowermost disc 5Cd is fixed, the gap Da between the plurality of discs 5Cd may be reduced as the vertical rack 51, 52 and the top frame 53 descend.

A first grill 54 may form one end of the cover 5c, and may be coupled to the lower side of the top frame 53. A third grill 56 may form the other end of the cover 5c, and may be coupled to the lower side of the top frame 53. A second grill 55 may be positioned between the first grill 54 and the third grill 56, and may be coupled to the lower side of the top frame 53. The first spine 57 may be positioned between the first grill 54 and the second grill 55, and the second spine 58 may be positioned between the second grill 55 and the third grill 56.

Each of the first to third grills 54, 55, 56 may include a plurality of blades 5Ca and a plurality of links 5Cb. The blades 5Ca may be extended along the top frame 53, and may be curved. The links 5Cb may be extended in a direction intersecting with the blades 5Ca, and the rear end of each of the links 5Cb may be pivotally coupled to each of the blades 5Ca. For example, the length of the blade 5Ca of the second grill 55 may be greater than the length of the blade 5Ca of the first and third grills 54, 56.

The blades 5Ca of the first grill 54 may be connected to one side surface of the first spine 57 through links 5Cb. The front end of each of the links 5Cb may be pivotally coupled to one side surface of each of the discs 5Cd of the first spine 57.

The blades 5Ca of the second grill 55 may be connected to the other side surface of the first spine 57 through links 5Cb. The front end of each of the links 5Cb may be pivotally coupled to the other side surface of each of the discs 5Cd of the first spine 57. The blades 5Ca of the second grill 55 may be connected to one side surface of the second spine 58 through links 5Cb. The front end of each of the links 5Cb may be pivotally coupled to one side surface of each of the discs 5Cd of the second spine 58.

The blades 5Ca of the third grill 56 may be connected to the other side surface of the second spine 58 through the links 5Cb. The front end of each of the links 5Cb may be pivotally coupled to the other side surface of each of the discs 5Cd of the second spine 58.

The lowermost blade 5Ca of each of the first to third grills 54, 55, 56 may be seated on the upper surface of the horizontal frame inside the housing 3. The horizontal frame on which the lowermost blade 5Ca is seated may be the same as the horizontal frame on which the lowermost disc 5Cb is seated. Thus, since the position of the lowermost blade 5Ca is fixed, the gap Db between the plurality of blades 5Ca may be reduced as the vertical rack 51, 52 and the top frame 53 descend.

Accordingly, the cover 5c may be inserted into the interior of the housing 3 through the hole 3h of the housing 3 as it descends from the rear of the display 70D, thereby gradually opening the rear surface of the display 70D. The cover 5c may be exposed to the outside of the housing 3 through the hole 3h of the housing 3 as it ascends from the rear of the display 70D, thereby gradually covering the rear surface of the display 70D.

Referring again to FIGS. 21 and 23, the box 6 may be movably coupled to the housing 3. The box 6 may be opened by moving rearward from the housing 3, and closed by being inserted into the housing 3. For example, the box 6 may be a refrigerator. Alternatively, the box 6 may be a storage unit for storing items. The box 6 may be referred to as a drawer 6.

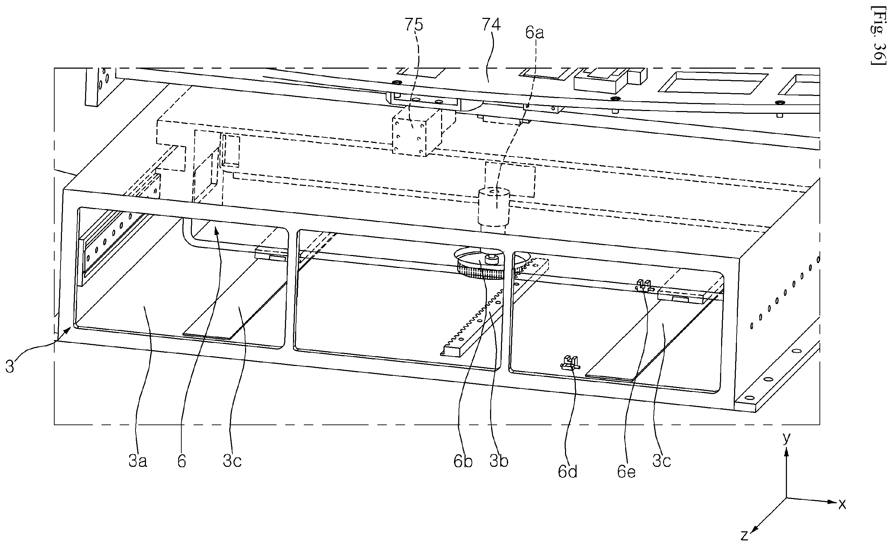

Referring to FIG. 36, the base 3a of the housing 3 may form the bottom of the housing 3. The rack 3b may be fixed on the base 3a, and may be extended long in the moving direction of the box 6, i.e., the front-rear direction. A pair of grooves 3c may be formed on the base 3a, may be extended along the rack 3b, and may be opposite to each other with respect to the rack 3b.

The box 6 may be positioned on the base 3a of the housing 3. The motor 6a may be mounted on the box 6, and may be an electric motor that is able to adjust the rotational direction, rotational speed, and rotational angle of the rotation axis. The pinion 6b may be fixed to the rotation axis of the motor 6a, and may rotate around an axis parallel to the vertical direction. The pinion 6b may be engaged with the rack 3b. Accordingly, when the motor 6a is driven, the box 6 may move rearward or forward.

A pair of sliders 6c may be fixed to the bottom of the box 6, and may be movably inserted into a pair of grooves 3c of the base 3a. Accordingly, the pair of sliders 6c and the pair of grooves 3c may guide the movement of the box 6.

A front sensor 6d may be positioned adjacent to the front end of the base 3a, and may be mounted on the base 3a. A portion of the box 6 may be detected by the front sensor 6d. For example, the front sensor 6d may be a photo sensor, a proximity sensor, a Hall sensor, or a limit switch that detects the portion of the box 6. Accordingly, the controller may control the position of the base 3a moving forward on the basis of information obtained from the front sensor 6d. That is, when the portion of the box 6 is detected by the front sensor 6d, the controller may stop the forward movement of the box 6, and the box 6 may be closed (see FIG. 21).

A rear sensor 6e may be positioned adjacent to the rear end of the base 3a, and may be mounted on the base 3a. A portion of the box 6 may be detected by the rear sensor 6e. For example, the rear sensor 6e may be a photo sensor, proximity sensor, Hall sensor, or limit switch that detects the portion of the box 6. Accordingly, the controller may control the position of the base 3a moving rearward on the basis of information obtained from the rear sensor 6e. That is, when the portion of the box 6 is detected by the rear sensor 6e, the controller may stop the rearward movement of the box 6, and the box 6 may be opened (see FIG. 23).

Referring to FIGS. 1 to 36, the display device according to an aspect of the present disclosure may include: a first curved display; a second display which overlaps with the first display in a radial direction of the first display, and which is curved along the first display; a first plate to which the first display is movably coupled in a circumferential direction of the first display; and a second plate to which the second display is movably coupled in a circumferential direction of the second display, wherein the second plate may be movably coupled to the first plate in the radial direction of the first display.

The second display may overlap with the first display in the radial direction of the first display, or may be next to the first display in the circumferential direction of the first display.

A center of curvature of the second display may be eccentric from a center of curvature of the first display, or may form concentric with the center of curvature of the first display.

The second display may move to overlap with the first display in a state in which the center of curvature of the second display is eccentric from the center of curvature of the first display, or may move to be next to the first display in a state in which the center of curvature of the second display is concentric with the center of curvature of the first display.

The display device may further include a supporter which is fixed to one side of the first display facing the first plate, and which is seated on the first plate, the first plate may include a slot which is formed through the first plate, which extends in a moving direction of the first display, and into which a portion of the supporter is movably inserted.

The display device may further include: a motor mounted on the first plate; and a pinion fixed to a rotation axis of the motor, the supporter may include a rack which forms the portion of the supporter, and which is engaged with the pinion.

The display device may further include: a guide rail elongated in a direction intersecting with the slot of the supporter; a motor mounted on one side of the guide rail; a lead screw which extends along the guide rail, and which has one end fixed to a rotation axis of the motor; a slider movable along the lead screw; and a foldable link connecting the slider and the supporter.

The display device may further include: a guide rail elongated in a direction intersecting with the slot of the supporter; a motor mounted on one side of the guide rail; a lead screw which extends along the guide rail, and which has one end fixed to a rotation axis of the motor; a slider movable along the lead screw; and a gas spring connecting the slider and the supporter.

The supporter may include: a vertical part fixed to the one side of the first display; a horizontal part which intersects with the vertical part, and which is parallel to the first plate; and a roller which is mounted on the horizontal part at between the horizontal part and the first plate, and which is rotatable on the first plate.

The display device may further include: a first motor mounted on the first plate; a first pinion fixed to a rotation axis of the first motor; and a first rack which extends in a radial direction of the first display, which is fixed to the second plate, and which is engaged with the first pinion.

The display device may further include: a second motor mounted on the first plate; a second pinion fixed to a rotation axis of the second motor; and a second rack which extends in a circumferential direction of the second display, which is fixed to the second display, and which is engaged with the second pinion, the second plate includes a slot which is formed through the second plate, which extends in a longitudinal direction of the second rack, and into which the second rack is movably inserted.

The display device may further include: a roller which is mounted on the second display at between the second display and the second plate, and which is rotatable on the second plate or the first display.

The display device may further include: a cover opposite to the second display with respect to the first display which is overlapped with the second display, and the cover may gradually cover the first display while ascending, or may gradually expose the first display while descending.

The display device may further include: a housing on which the first display and the second display are seated; and a box movably coupled to the housing, the box may be opened while being exposed to the outside of the housing, or may be closed while being inserted into the inside of the housing.

A vehicle may include the display device facing a cabin of the vehicle.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

The above detailed description should not be construed as restrictive in all respects and should be considered as illustrative. The scope of the present disclosure should be determined by a reasonable interpretation of the appended claims, and all modifications within the equivalent scope of the present disclosure are included in the scope of the present disclosure.

## Claims

1. A display device comprising:
a curved first display;
a second display which overlaps with the first display in a radial direction of the first display, and which is curved along the first display;
a first plate to which the first display is movably coupled in a circumferential direction of the first display; and
a second plate to which the second display is movably coupled in a circumferential direction of the second display,
wherein the second plate is movably coupled to the first plate in the radial direction of the first display.

2. The display device of claim 1, wherein the second display overlaps with the first display in the radial direction of the first display, or is next to the first display in the circumferential direction of the first display.

3. The display device of claim 2, wherein a center of curvature of the second display is eccentric from a center of curvature of the first display or, forms concentric with the center of curvature of the first display.

4. The display device of claim 3, wherein the second display moves to overlap with the first display in a state in which the center of curvature of the second display is eccentric from the center of curvature of the first display, or
moves to be next to the first display in a state in which the center of curvature of the second display is concentric with the center of curvature of the first display.

5. The display device of claim 1, further comprising a supporter which is fixed to one side of the first display facing the first plate, and which is seated on the first plate,
wherein the first plate comprises a slot which is formed through the first plate, which extends in a moving direction of the first display, and into which a portion of the supporter is movably inserted.

6. The display device of claim 5, further comprising:
a motor mounted on the first plate; and
a pinion fixed to a rotation axis of the motor,
wherein the supporter comprises a rack which forms the portion of the supporter, and which is engaged with the pinion.

7. The display device of claim 5, further comprising:
a guide rail elongated in a direction intersecting with the slot of the supporter;
a motor mounted on one side of the guide rail;
a lead screw which extends along the guide rail, and which has one end fixed to a rotation axis of the motor;
a slider movable along the lead screw; and
a foldable link connecting the slider and the supporter.

8. The display device of claim 5, further comprising:
a guide rail elongated in a direction intersecting with the slot of the supporter;
a motor mounted on one side of the guide rail;
a lead screw which extends along the guide rail, and which has one end fixed to a rotation axis of the motor;
a slider movable along the lead screw; and
a gas spring connecting the slider and the supporter.

9. The display device of claim 5, wherein the supporter comprises:
a vertical part fixed to the one side of the first display;
a horizontal part which intersects with the vertical part, and which is parallel to the first plate; and
a roller which is mounted on the horizontal part at between the horizontal part and the first plate, and which is rotatable on the first plate.

10. The display device of claim 1, further comprising:
a first motor mounted on the first plate;
a first pinion fixed to a rotation axis of the first motor; and
a first rack which extends in a radial direction of the first display, which is fixed to the second plate, and which is engaged with the first pinion.

11. The display device of claim 10, further comprising:
a second motor mounted on the first plate;
a second pinion fixed to a rotation axis of the second motor; and
a second rack which extends in a circumferential direction of the second display, which is fixed to the second display, and which is engaged with the second pinion,
wherein the second plate comprises a slot which is formed through the second plate, which extends in a longitudinal direction of the second rack, and into which the second rack is movably inserted.

12. The display device of claim 11, further comprising a roller which is mounted on the second display at between the second display and the second plate, and which is rotatable on the second plate or the first display.

13. The display device of claim 1, further comprising a cover opposite to the second display with respect to the first display which is overlapped with the second display,
wherein the cover gradually covers the first display while ascending, or gradually exposes the first display while descending.

14. The display device of claim 1, further comprising:
a housing on which the first display and the second display are seated; and
a box movably coupled to the housing,
wherein the box is opened while being exposed to the outside of the housing,
or is closed while being inserted into the inside of the housing.

15. A vehicle comprising a display device of claim 1 facing a cabin of the vehicle.
